# FASCICULE DE BREVET EUROPEEN

(11) **EP 3 359 794 B1**
(45) Date de publication et mention de la délivrance du brevet: **15.12.2021**
(21) Numéro de dépôt: 16766008.3
(22) Date de dépôt: 15.09.2016
(51) Int. Cl.: F02G 5/02, F01M 5/00, F01K 17/00, F16C 33/66, F01D 25/18, F01M 5/02

(54) **DISPOSITIF DE LUBRIFICATION D'UN PALIER RECEVANT UN ARBRE ROTATIF D'UN ÉLÉMENT D'UN CIRCUIT FERMÉ FONCTIONNANT SELON UN CYCLE DE RANKINE ET PROCÉDÉ UTILISANT UN TEL DISPOSITIF**
VORRICHTUNG ZUM SCHMIEREN EINES LAGERS MIT AUFNAHME EINER DREHWELLE EINES ELEMENTS EINES GESCHLOSSENEN KREISLAUFS MIT BETRIEB IN EINEM RANKINE-ZYKLUS UND VERFAHREN MIT SOLCH EINER VORRICHTUNG
DEVICE FOR LUBRICATING A BEARING ACCEPTING A ROTARY SHAFT OF AN ELEMENT OF A CLOSED CIRCUIT OPERATING ON A RANKINE CYCLE AND METHOD USING SUCH A DEVICE

(30) Priorité: 09.10.2015 FR 1559607
(43) Date de publication de la demande: 15.08.2018
(73) Titulaire: IFP Energies nouvelles, 92500 Rueil-Malmaison (FR); Enogia, 13015 Marseille (FR)
(72) Inventeur: GOUBET, Nicolas, 84120 Pertuis (FR); LEROUX, Arthur, 13001 Marseille (FR); PAUCHET, Antonin, 13006 Marseille (FR)
(74) Mandataire: IFP Energies nouvelles
(86) Numéro de dépôt international: PCT/EP2016/071840
(87) Numéro de publication internationale: WO 2017/060055

(56) Documents cités:
- EP-A1- 1 405 987
- DE-B3-102007 041 944
- JP-A- 2004 278 570
- JP-A- 2004 353 571
- JP-A- 2007 327 359

## Description

La présente invention se rapporte à un dispositif de lubrification d'un palier recevant un arbre rotatif d'un élément d'un circuit fermé fonctionnant selon un cycle de Rankine et à un procédé utilisant un tel dispositif.

Elle concerne plus particulièrement mais non exclusivement un dispositif de lubrification d'un palier à roulement à billes supportant l'arbre de la turbine que comporte le circuit.

Comme cela est largement connu, le cycle de Rankine est un cycle thermodynamique par lequel de la chaleur provenant d'une source de chaleur externe est transmise à un circuit fermé qui contient un fluide de travail.

Ce cycle se décompose généralement en une étape durant laquelle le fluide de travail à bas point de congélation est comprimé de manière isentropique, suivie d'une étape où ce fluide comprimé est chauffé et vaporisé au contact d'une source de chaleur. Cette vapeur est ensuite détendue, au cours d'une autre étape, de manière isentropique dans une machine de détente, puis, dans une dernière étape, cette vapeur détendue est refroidie et condensée au contact d'une source froide.

Pour réaliser ces différentes étapes, le circuit comprend une pompe pour comprimer le fluide de travail sous forme liquide et le faire circuler dans le circuit, un échangeur de chaleur (ou évaporateur) qui est balayé par un fluide chaud pour réaliser la vaporisation au moins partielle du fluide comprimé, une machine de détente pour détendre la vapeur, telle qu'une turbine, qui transforme l'énergie de cette vapeur en une autre énergie, comme une énergie mécanique ou électrique, et un autre échangeur de chaleur (ou condenseur) grâce auquel la chaleur contenue dans la vapeur est cédée à une source froide, généralement un fluide de refroidissement ou de l'air extérieur qui balaye ce condenseur, pour transformer cette vapeur en un liquide.

Il est également connu, notamment par les documents FR 2884555 A1 et DE 102007041944 B3, d'utiliser l'énergie calorifique véhiculée par les gaz d'échappement d'un moteur à combustion interne, en particulier celui utilisé pour des véhicules automobiles, comme source chaude pour assurer le chauffage et la vaporisation du fluide traversant l'évaporateur.

Ceci permet d'améliorer l'efficacité énergétique de ce moteur en récupérant une grande partie de l'énergie perdue à l'échappement pour la transformer en une énergie qui peut être utilisée pour le véhicule automobile au travers du circuit à cycle de Rankine.

Comme cela est connu, les paliers de la machine de détente nécessitent d'être lubrifiés pour assurer la libre rotation de l'arbre de la machine de détente dans ces paliers.

Généralement, pour assurer cette lubrification, la pratique consiste à utiliser une huile lubrifiante.

Cependant, une telle utilisation d'une huile lubrifiante entraîne des inconvénients non négligeables.

En effet, l'étanchéité, au sein de la machine de détente, entre les différents circuits (en l'occurrence entre le circuit du fluide de travail et le circuit de lubrification), n'est jamais parfaite. Il se produit donc couramment une pollution progressive du fluide de travail par l'huile lubrifiante.

Cette pollution se traduit par une dégradation des performances du circuit de travail, par la perte des qualités thermodynamiques du fluide de travail et par l'encrassement des échangeurs de chaleur.

Une des solutions connues consiste à remplacer l'huile lubrifiante par le fluide de travail pour assurer la fonction de lubrification.

Ainsi, les défauts d'étanchéité entre les deux circuits ne conduisent pas à une pollution du fluide de travail, mais à un mélange entre du fluide de travail à "vocation thermodynamique" et ce même fluide de travail à "vocation lubrifiante".

Avec cette solution, l'inconvénient réside dans le fait que le fluide de travail présente généralement des qualités lubrifiantes médiocres.

En particulier, le fluide de travail a une propension à se vaporiser facilement et il n'assure, dans cet état physique, aucune fonction lubrifiante.

La présente invention se propose de remédier aux inconvénients précités grâce à un dispositif de lubrification qui permet de contrôler l'état du fluide de travail afin de s'assurer qu'il ne se vaporise pas avant d'avoir assuré sa fonction lubrifiante des paliers.

A cet effet, l'invention concerne un dispositif de lubrification d'au moins un palier recevant un arbre rotatif d'un élément d'un circuit fermé fonctionnant selon un cycle de Rankine, ledit circuit comprenant une pompe de compression/circulation d'un fluide de travail sous forme liquide, un échangeur de chaleur balayé par une source chaude pour l'évaporation dudit fluide, des moyens de détente du fluide sous forme vapeur, un échangeur de refroidissement balayé par une source froide pour la condensation du fluide de travail, un réservoir de fluide de travail, des conduites de circulation du fluide de travail et un circuit de lubrification pour lubrifier ledit palier, caractérisé en ce que le circuit de lubrification comporte une conduite de lubrification raccordée au circuit fermé et comprenant des moyens de sous-refroidissement du fluide circulant dans ladite conduite de lubrification.

La conduite de lubrification peut prendre naissance sur une des conduites situées entre le réservoir et l'échangeur de chaleur.

La conduite de lubrification peut porter un régulateur et/ou un limiteur de pression et/ou de débit.

La conduite de lubrification peut prendre naissance sur la conduite en amont de la pompe de compression/circulation.

La conduite de lubrification peut comprendre une pompe de circulation.

La conduite de lubrification peut comprendre un capteur de température.

La conduite de lubrification peut comprendre un capteur de pression.

Les moyens de sous-refroidissement peuvent comprendre un dispositif à effet Peltier.

Le palier peut comprendre un diffuseur circonférentiel du fluide de travail.

Le diffuseur peut comprendre une entretoise munie de points d'injection régulièrement repartis circonférentiellement.

Le fluide de travail peut être un fluide organique ou des mélanges de fluides organiques.

Les moyens de détente peuvent comprendre une turbine (30) et en ce que le palier recevant l'arbre rotatif est le palier de la turbine.

L'invention concerne également un procédé de lubrification d'au moins un palier recevant un arbre rotatif d'un élément d'un circuit fermé fonctionnant selon un cycle de Rankine, ledit circuit comprenant une pompe de compression/circulation d'un fluide de travail sous forme liquide, un échangeur de chaleur balayé par une source chaude pour l'évaporation dudit fluide, des moyens de détente du fluide sous forme vapeur, un échangeur de refroidissement balayé par une source froide pour la condensation du fluide de travail, un réservoir de fluide de travail, des conduites de circulation du fluide de travail, et un circuit de lubrification pour lubrifier ledit palier, caractérisé en ce qu'il consiste à dériver une partie du fluide de travail du circuit fermé vers le palier et à sous-refroidir ce fluide avant son admission dans ledit palier.

Le procédé peut consister à réguler et/ou à limiter la pression et/ou le débit du fluide pour contrôler la quantité de fluide admis dans le palier.

Le procédé peut consister à mettre met en route une pompe de circulation placée sur la conduite de pour la lubrification des paliers et on actionne les moyens de sous-refroidissement avant la mise en route de la pompe de compression/circulation de manière à assurer la lubrification dudit palier.

Le procédé peut consister à repartir le fluide sur toute la circonférence du palier.

Les autres caractéristiques et avantages de l'invention vont apparaître à la lecture de la description qui va suivre, donnée à titre uniquement illustratif et non limitatif, et à laquelle sont annexées :
- la figure 1 qui illustre un circuit fermé fonctionnant selon un cycle de Rankine de l'art antérieur avec le dispositif de lubrification selon l'invention et
- la figure 2 qui montre un détail d'un des paliers de la turbine du circuit fermé de la figure 1.

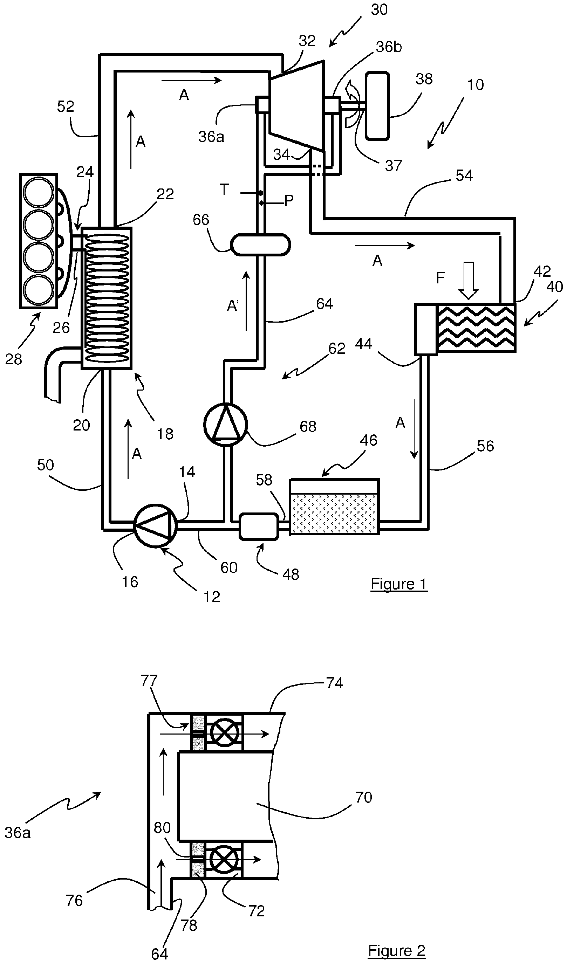

Sur la figure1, le circuit fermé à cycle de Rankine 10 est avantageusement de type ORC (Organic Rankine Cycle) qui utilise un fluide organique ou un mélange de fluides organiques, comme du butane, de l'éthanol, des hydrofluorocarbures, du dioxyde de carbone.

Il est bien entendu que le circuit fermé peut fonctionner avec un fluide non organique comme de l'ammoniac ou de l'eau.

Ce circuit comprend une pompe de circulation et de compression 12 du fluide de travail, dénommée pompe dans la suite de la description, avec une entrée 14 du fluide de travail sous forme liquide et une sortie 16 de ce fluide de travail également sous forme liquide mais comprimé sous une pression élevée. Cette pompe est avantageusement entraînée en rotation par tous moyens; comme un moteur électrique (non représenté).

Ce circuit comporte aussi un échangeur de chaleur 18, dénommé évaporateur, traversé par le fluide de travail comprimé entre une entrée 20 de ce fluide liquide et une sortie 22 au travers de laquelle le fluide de travail ressort de cet évaporateur sous forme de vapeur comprimée. Cet évaporateur est parcouru par une source chaude 24 sous forme liquide ou gazeuse. Cette source chaude peut provenir des gaz d'échappement circulant dans la ligne d'échappement 26 d'un moteur à combustion interne 28, du fluide de refroidissement d'un moteur à combustion interne, du fluide de refroidissement d'un four industriel, ou du fluide caloporteur chauffé dans des installations thermiques ou par un bruleur.

Ce circuit comporte également une machine de détente 30 recevant par son entrée 32 le fluide de travail sous forme de vapeur comprimée à haute pression, ce fluide ressortant par la sortie 34 de cette machine sous forme de vapeur détendue à basse pression.

Avantageusement, cette machine de détente est sous la forme d'une turbine de détente dont l'arbre du rotor est placé sur deux paliers 36a et 36b et qui est entraîné en rotation par le fluide de travail sous forme de vapeur en commandant en rotation un arbre de liaison 37. De manière préférentielle, cet arbre permet de transmettre l'énergie récupérée à tout dispositif transformateur, comme par exemple une génératrice électrique 38.

Le circuit comporte encore un échangeur de refroidissement 40, ou condenseur, avec une entrée 42 pour la vapeur basse pression détendue et une sortie 44 pour le fluide de travail transformé sous forme liquide après son passage dans ce condenseur. Ce condenseur est balayé par une source froide, généralement un flux d'air froid (Flèche F) généralement à température ambiante, de manière à refroidir la vapeur détendue pour qu'elle se condense et se transforme en un liquide. Bien entendu, toute autre source froide de refroidissement, comme de l'eau, peut être utilisée pour assurer la condensation de la vapeur.

Ce circuit comporte également un réservoir fermé 46 qui permet de conserver le fluide de travail à l'état liquide et, de manière préférentielle, un filtre 48, comme un filtre à cartouche, pour filtrer le fluide de travail sortant du réservoir avant son introduction dans la pompe.

Les différents éléments du circuit sont reliés entre eux par des conduites de circulation de fluide 50, 52, 54, 56, 58, 60 permettant de relier successivement la pompe avec l'évaporateur (conduite d'évaporateur 50), l'évaporateur avec la turbine (conduite de turbine 52), cette turbine avec le condenseur (conduite de condenseur 54), le condenseur avec le réservoir (conduite de réservoir 56), le réservoir au filtre (conduite de filtre 58) et le filtre à la pompe (conduite de pompe 60) pour que le fluide de travail circule selon le sens indiqué par les flèches A.

Comme mieux visible sur la figure 1, le circuit fermé comprend un circuit de lubrification 62 utilisant le fluide qui y circule pour lubrifier au moins un palier recevant un arbre rotatif d'un élément du circuit fermé et plus particulièrement les paliers 36a, 36b de la turbine 30.

Bien entendu et cela sans sortir du cadre de l'invention, ce circuit de lubrification peut être utilisé pour lubrifier les paliers de tout autre élément tournant du circuit fermé, comme la pompe 12.

Ce circuit de lubrification comprend une conduite de lubrification 64 qui prend naissance sur une des conduites situées entre le réservoir 46 et l'évaporateur 18 et qui aboutit aux paliers 36a, 36b de la turbine 30.

Comme illustré à titre d'exemple sur la figure 1, cette conduite de lubrification prend naissance sur la conduite de pompe 60 entre le filtre et la pompe 12.

Cette conduite porte dans le sens de circulation selon la flèche A', une pompe de circulation 68, ou pompe de lubrification, permettant de faire circuler ce fluide dans la conduite et des moyens de sous-refroidissement 66 du fluide circulant dans la conduite de lubrification.

Avantageusement, les moyens de refroidissement comprennent un dispositif à effet Peltier alimenté électriquement.

La conduite porte également, entre la pompe 68 et les paliers, un capteur de température T et un capteur de pression P du fluide circulant dans cette conduite.

Pour assurer la lubrification des paliers 36a et 36b, le fluide caloporteur, qui est filtré par le filtre 48 après sa sortie du réservoir 46 et qui est en phase liquide, est en partie dévié dans la conduite de lubrification pour y circuler sous l'impulsion de la pompe de lubrification 68. Cette pompe permet également de réguler le débit de fluide destiné à la lubrification des paliers.

Lors de cette circulation, ce fluide est sous-refroidi par le dispositif à effet Peltier avant d'être introduit dans les paliers 36a et 36b.

Outre le fait que le dispositif de sous-refroidissement permet, si nécessaire, de réguler la température du fluide destiné à la lubrification grâce aux capteurs, il a le rôle essentiel de retarder le passage à l'état gazeux du fluide après qu'il ait été injecté, à l'état liquide, dans les paliers.

Avantageusement, la pompe de circulation 68 destinée à la lubrification des paliers et le dispositif à effet Peltier sont mis en route avant la mise en route de la pompe principale 12 du circuit fermé de manière à assurer la lubrification de la turbine avant sa mise en rotation.

Par cela, la fonction lubrifiante des paliers est mieux assurée.

Bien entendu et cela sans sortir du cadre de l'invention, il peut être envisagé de se dispenser de placer une pompe de circulation dans la conduite de lubrification et de se servir de la pompe 12 pour faire circuler le fluide dans cette conduite.

Pour cela, cette conduite prend naissance en aval de la pompe 12, en considérant le sens de circulation A du fluide, et aboutit aux paliers 36a, 36b de la turbine 30.

Avantageusement, la conduite porte un régulateur et/ou un limiteur de pression et/ou de débit de manière à contrôler la quantité de fluide qui arrive aux paliers.

A titre d'exemple, comme illustré à la figure 2, l'arbre 70 de la turbine est porté par un roulement à billes 72 logé entre cet arbre et l'enveloppe fermée 74 du palier 36a. Cette enveloppe comporte également une admission 76 du fluide sous-refroidi par la conduite 64.

Comme mieux visible sur cette figure, un diffuseur circonférentiel 77 du fluide est placé entre l'admission et le roulement à billes.

Ce diffuseur est ici une entretoise 78 munie de plusieurs points d'injection 80 répartis circonférentiellement de manière régulière.

Ainsi, le fluide est mieux réparti sur toute la circonférence du roulement et la lubrification est plus homogène et plus efficace.

## Revendications

1. Dispositif de lubrification d'au moins un palier recevant un arbre rotatif d'un élément d'un circuit fermé (10) fonctionnant selon un cycle de Rankine, ledit circuit comprenant une pompe de compression/circulation (12) d'un fluide de travail sous forme liquide, un échangeur de chaleur (18) balayé par une source chaude (24) pour l'évaporation dudit fluide, des moyens de détente (30) du fluide sous forme vapeur, un échangeur de refroidissement (40) balayé par une source froide (F) pour la condensation du fluide de travail, un réservoir de fluide de travail (46), des conduites de circulation du fluide de travail (50, 52, 54, 56, 58, 60) et un circuit de lubrification (62) pour lubrifier ledit palier, **caractérisé en ce que** le circuit de lubrification comporte une conduite de lubrification (64) raccordée au circuit fermé (10) et comprenant des moyens de sous-refroidissement (66) du fluide circulant dans ladite conduite de lubrification, ladite conduite de lubrification (64) dérivant une partie du fluide de travail du circuit fermé vers ledit palier.

2. Dispositif de lubrification selon la revendication 1, **caractérisé en ce que** la conduite de lubrification (64) prend naissance sur une des conduites (50, 58, 60) situées entre le réservoir (46) et l'échangeur de chaleur (18).

3. Dispositif de lubrification selon la revendication 1 ou 2, **caractérisé en ce que** la conduite de lubrification (64) porte un régulateur et/ou un limiteur de pression et/ou de débit.

4. Dispositif de lubrification selon la revendication 1 ou 2, **caractérisé en ce que** la conduite de lubrification (64) prend naissance sur la conduite (60, 58) en amont de la pompe de compression/circulation (12).

5. Dispositif de lubrification selon l'une des revendications précédentes, **caractérisé en ce que** la conduite de lubrification (64) comprend une pompe de circulation (68).

6. Dispositif de lubrification selon l'une des revendications précédentes, **caractérisé en ce que** la conduite de lubrification (64) comprend un capteur de température.

7. Dispositif de lubrification selon l'une des revendications précédentes, **caractérisé en ce que** la conduite de lubrification (64) comprend un capteur de pression.

8. Dispositif de lubrification selon l'une des revendications précédentes, **caractérisé en ce que** les moyens de sous-refroidissement (66) comprennent un dispositif à effet Peltier.

9. Dispositif de lubrification selon l'une des revendications précédentes, **caractérisé en ce que** le palier comprend un diffuseur circonférentiel (77) du fluide de travail.

10. Dispositif de lubrification selon la revendication 9, **caractérisé en ce que** le diffuseur comprend une entretoise (78) munie de points d'injection (80) régulièrement repartis circonférentiellement.

11. Dispositif de lubrification selon l'une des revendications précédentes, **caractérisé en ce que** le fluide de travail est un fluide organique ou des mélanges de fluides organiques.

12. Dispositif de lubrification selon l'une des revendications précédentes, **caractérisé en ce que** les moyens de détente comprennent une turbine (30) et **en ce que** le palier recevant l'arbre rotatif est le palier de la turbine.

13. Procédé de lubrification d'au moins un palier recevant un arbre rotatif d'un élément d'un circuit fermé fonctionnant selon un cycle de Rankine, ledit circuit comprenant une pompe de compression/circulation (12) d'un fluide de travail sous forme liquide, un échangeur de chaleur (18) balayé par une source chaude (24) pour l'évaporation dudit fluide, des moyens de détente (30) du fluide sous forme vapeur, un échangeur de refroidissement (42) balayé par une source froide (F) pour la condensation du fluide de travail, un réservoir de fluide de travail (48), des conduites de circulation du fluide de travail (50, 52, 54 ,56, 58, 60), et un circuit de lubrification (62) pour lubrifier ledit palier, **caractérisé en ce qu'**on dérive dans une conduite de lubrification (64) une partie du fluide de travail du circuit fermé vers le palier et on sous-refroidit cette partie de fluide avant son admission dans ledit palier.

14. Procédé de lubrification selon la revendication 13, **caractérisé en ce qu'**on régule et/ou limite la pression et/ou le débit du fluide pour contrôler la quantité de fluide admis dans le palier.

15. Procédé de lubrification selon la revendication 13 ou 14, **caractérisé en ce qu'**on met en route une pompe de circulation (68) placée sur la conduite de pour la lubrification des paliers et on actionne les moyens de sous-refroidissement (66) avant la mise en route de la pompe de compression/circulation de manière à assurer la lubrification dudit palier.

16. Procédé de lubrification selon l'une des revendications 13 à 15, **caractérisé en ce qu'**on repartit le fluide sur toute la circonférence du palier.

17. Circuit fermé (10) fonctionnant selon un cycle de Rankine, **caractérisé en ce qu'**il comprend le dispositif de lubrification selon l'une des revendications 1 à 12 ou **en ce qu'**il utilise le procédé selon l'une des revendications 13 à 16.

## Patentansprüche

1. Vorrichtung zum Schmieren mindestens eines Lagers, das eine Drehwelle eines Elements eines geschlossenen Kreislaufs (10) aufnimmt, der nach einem Rankine-Zyklus arbeitet, wobei der Zyklus eine Pumpe zur Kompression/Zirkulation (12) eines Arbeitsfluids in flüssiger Form, einen Wärmetauscher (18), der von einer Wärmequelle (24) zur Verdampfung des Fluids umströmt wird, Mittel zur Ausdehnung (30) des dampfförmigen Fluids, einen Kühlwärmetauscher (40), der von einer Kältequelle (F) zur Kondensation des Arbeitsfluids umströmt wird, einen Arbeitsfluid-Vorratsbehälter (46), Arbeitsfluid-Zirkulationsleitungen (50, 52, 54, 56, 58, 60) und einen Schmierkreislauf (62) zur Schmierung des Lagers umfasst, **dadurch gekennzeichnet, dass** der Schmierkreislauf eine Schmierleitung (64) aufweist, die an den geschlossenen Kreislauf (10) angeschlossen ist und Mittel zur Unterkühlung (66) des Fluids umfasst, das in der Schmierleitung zirkuliert, wobei die Schmierleitung (64) einen Teil des Arbeitsfluids des geschlossenen Kreislaufs zum Lager abzweigt.

2. Schmiervorrichtung nach Anspruch 1, **dadurch gekennzeichnet, dass** die Schmierleitung (64) an einer der Leitungen (50, 58, 60) ihren Anfang nimmt, die sich zwischen dem Vorratsbehälter (46) und dem Wärmetauscher (18) befinden.

3. Schmiervorrichtung nach Anspruch 1 oder 2, **dadurch gekennzeichnet, dass** die Schmierleitung (64) einen Druck- und/oder Durchsatzregler und/oder -begrenzer trägt.

4. Schmiervorrichtung nach Anspruch 1 oder 2, **dadurch gekennzeichnet, dass** die Schmierleitung (64) an der Leitung (60, 58) stromaufwärts der Kompressions-/Zirkulationspumpe (12) ihren Anfang nimmt.

5. Schmiervorrichtung nach einem der vorhergehenden Ansprüche, **dadurch gekennzeichnet, dass** die Schmierleitung (64) eine Zirkulationspumpe (68) umfasst.

6. Schmiervorrichtung nach einem der vorhergehenden Ansprüche, **dadurch gekennzeichnet, dass** die Schmierleitung (64) einen Temperatursensor umfasst.

7. Schmiervorrichtung nach einem der vorhergehenden Ansprüche, **dadurch gekennzeichnet, dass** die Schmierleitung (64) einen Drucksensor umfasst.

8. Schmiervorrichtung nach einem der vorhergehenden Ansprüche, **dadurch gekennzeichnet, dass** die Unterkühlungsmittel (66) eine Peltiereffekt-Vorrichtung umfassen.

9. Schmiervorrichtung nach einem der vorhergehenden Ansprüche, **dadurch gekennzeichnet, dass** das Lager einen Umfangsdiffusor (77) des Arbeitsfluids umfasst.

10. Schmiervorrichtung nach Anspruch 9, **dadurch gekennzeichnet, dass** der Diffusor ein Distanzstück (78) umfasst, das mit Einspritzpunkten (80) versehen ist, die gleichmäßig in Umfangsrichtung verteilt sind.

11. Schmiervorrichtung nach einem der vorhergehenden Ansprüche, **dadurch gekennzeichnet, dass** das Arbeitsfluid ein organisches Fluid ist oder Gemische organischer Fluide sind.

12. Schmiervorrichtung nach einem der vorhergehenden Ansprüche, **dadurch gekennzeichnet, dass** die Ausdehnungsmittel eine Turbine (30) umfassen, und dadurch, dass das Lager, das die Drehwelle aufnimmt, das Lager der Turbine ist.

13. Verfahren zum Schmieren mindestens eines Lagers, das eine Drehwelle eines Elements eines geschlossenen Kreislaufs aufnimmt, der nach einem Rankine-Zyklus arbeitet, wobei der Zyklus eine Pumpe zur Kompression/Zirkulation (12) eines Arbeitsfluids in flüssiger Form, einen Wärmetauscher (18), der von einer Wärmequelle (24) zur Verdampfung des Fluids umströmt wird, Mittel zur Ausdehnung (30) des dampfförmigen Fluids, einen Kühlwärmetauscher (42), der von einer Kältequelle (F) zur Kondensation des Arbeitsfluids umströmt wird, einen Arbeitsfluid-Vorratsbehälter (48), Arbeitsfluid-Zirkulationsleitungen (50, 52, 54, 56, 58, 60) und einen Schmierkreislauf (62) zur Schmierung des Lagers umfasst, **dadurch gekennzeichnet, dass** in einer Schmierleitung (64) ein Teil des Arbeitsfluids des geschlossenen Kreislaufs zum Lager abgezweigt wird und dieser Teil des Fluids vor dessen Einlass in das Lager unterkühlt wird.

14. Schmierverfahren nach Anspruch 13, **dadurch gekennzeichnet, dass** der Druck und/oder Durchsatz des Fluids geregelt und/oder begrenzt wird, um die Fluidmenge zu steuern, die in das Lager eingelassen wird.

15. Schmierverfahren nach Anspruch 13 oder 14, **dadurch gekennzeichnet, dass** eine Zirkulationspumpe (68) eingeschaltet wird, die auf der Leitung von zur Schmierung der Lager platziert ist, und die Unterkühlungsmittel (66) vor dem Einschalten der Kompressions-/Zirkulationspumpe betätigt werden, um die Schmierung des Lagers sicherzustellen.

16. Schmierverfahren nach einem der Ansprüche 13 bis 15, **dadurch gekennzeichnet, dass** das Fluid über den gesamten Umfang des Lagers verteilt wird.

17. Geschlossener Kreislauf (10), der nach einem Rankine-Zyklus arbeitet, **dadurch gekennzeichnet, dass** er die Schmiervorrichtung nach einem der Ansprüche 1 bis 12 umfasst, oder dadurch, dass er das Verfahren nach einem der Ansprüche 13 bis 16 verwendet.

## Claims

1. Device for the lubrication of at least one bearing receiving a rotary shaft of an element of a closed circuit (10) operating on a Rankine cycle, said circuit comprising a pump (12) for compressing/circulating a working fluid in liquid form, a heat exchanger (18) that is swept by a heat source (24) in order to evaporate said fluid, means (30) for expanding the fluid in vapor form, a cooling heat exchanger (40) that is swept by a cold source (F) in order to condense the working fluid, a working fluid reservoir (46), working fluid circulation ducts (50, 52, 54, 56, 58, 60) and a lubrication circuit (62) for lubricating said bearing, **characterized in that** the lubrication circuit comprises a lubrication duct (64) that is connected to the closed circuit (10) and comprises means (66) for subcooling the fluid flowing in said lubrication duct, wherein said lubrication duct (64) diverts part of the working fluid from the closed circuit to said bearing.

2. Lubrication device according to Claim 1, **characterized in that** the lubrication duct (64) begins at one of the ducts (50, 58, 60) located between the reservoir (46) and the heat exchanger (18) .

3. Lubrication device according to Claim 1 or 2, **characterized in that** the lubrication duct (64) has a regulator and/or a limiter for pressure and/or flow rate.

4. Lubrication device according to Claim 1 or 2, **characterized in that** the lubrication duct (64) begins at the duct (60, 58) upstream of the compression/circulation pump (12).

5. Lubrication device according to one of the preceding claims, **characterized in that** the lubrication duct (64) comprises a circulation pump (68).

6. Lubrication device according to one of the preceding claims, **characterized in that** the lubrication duct (64) comprises a temperature sensor.

7. Lubrication device according to one of the preceding claims, **characterized in that** the lubrication duct (64) comprises a pressure sensor.

8. Lubrication device according to one of the preceding claims, **characterized in that** the subcooling means (66) comprise a Peltier effect device.

9. Lubrication device according to one of the preceding claims, **characterized in that** the bearing comprises a circumferential diffuser (77) for the working fluid.

10. Lubrication device according to Claim 9, **characterized in that** the diffuser comprises a spacer (78) provided with circumferentially regularly spaced injection points (80).

11. Lubrication device according to one of the preceding claims, **characterized in that** the working fluid is an organic fluid or mixtures of organic fluids.

12. Lubrication device according to one of the preceding claims, **characterized in that** the expansion means comprise a turbine (30) and **in that** the bearing receiving the rotary shaft is the bearing of the turbine.

13. Method for the lubrication of at least one bearing receiving a rotary shaft of an element of a closed circuit operating on a Rankine cycle, said circuit comprising a pump (12) for compressing/circulating a working fluid in liquid form, a heat exchanger (18) that is swept by a heat source (24) in order to evaporate said fluid, means (30) for expanding the fluid in vapor form, a cooling heat exchanger (42) that is swept by a cold source (F) in order to condense the working fluid, a working fluid reservoir (48), working fluid circulation ducts (50, 52, 54, 56, 58, 60) and a lubrication circuit (62) for lubricating said bearing, **characterized in that**, in a lubrication duct (64), part of the working fluid is diverted from the closed circuit to the bearing, and this part of the fluid is subcooled prior to its ingress into the bearing.

14. Lubrication method according to Claim 13, **characterized in that** the pressure and/or the flow rate of the fluid are regulated and/or limited in order to control the quantity of fluid admitted into the bearing.

15. Lubrication method according to Claim 13 or 14, **characterized in that** a circulation pump (68) located on the duct of for lubricating the bearings is started up, and the subcooling means (66) are actuated prior to start-up of the compression/circulation pump in order to provide lubrication of said bearing.

16. Lubrication method according to one of Claims 13 to 15, **characterized in that** the fluid is distributed over the entire circumference of the bearing.

17. Closed circuit (10) operating on a Rankine cycle, **characterized in that** it comprises the lubrication device according to one of Claims 1 to 12, or **in that** it uses the method according to one of Claims 13 to 16.
